# DEMANDE DE BREVET EUROPEEN

(11) **EP 0 749 870 A1**
(43) Date de publication de la demande: **27.12.1996**
(21) Numéro de dépôt: 96401242.1
(22) Date de dépôt: 10.06.1996
(51) Int. Cl.: B60P 1/28

(54) **Benne et véhicule la comportant**

(30) Priorité: 19.06.1995 FR 9507294
(71) Demandeur: MARREL, F-42160 Andrézieux-Bouthéon (FR)
(72) Inventeur: Robert, Michel, 42390 Villars (FR); Claudinon, Jean-Louis, 42170 St. Just sur Loire (FR)
(74) Mandataire: Rinuy, Santarelli

(57) **Abrégé**

Une benne basculante vers l'arrière et comportant, entre ses extrémités avant et arrière, une paroi autoportante à section en U constituée par une tôle de fond (10) et par deux tôles latérales (11) , avec chaque tôle latérale (11) qui comporte un panneau de base (16) superposé à la tôle de fond (10), chaque panneau de base (16) ayant chacun de ses deux bords longitudinaux (17, 18) qui est uni par soudure à la tôle de fond (10).

## Description

L'invention a trait à une benne pour véhicule, du type que l'on peut vider par l'arrière en l'amenant avec un moyen d'entraînement que comporte le véhicule, à une position de bennage où elle est inclinée avec l'avant plus haut que l'arrière.

L'invention vise à fournir une telle benne qui offre de bonnes performances à l'emploi tout en étant de fabrication simple et économique.

Elle propose à cet effet une benne pour véhicule, adaptée à coopérer avec la structure dudit véhicule de sorte qu'elle puisse pivoter, sous l'effet d'un moyen d'entraînement que comporte ledit véhicule, autour d'un axe transversal situé à l'arrière du véhicule, entre une position route où elle est horizontale ou à peu près et une position de bennage où elle est inclinée avec l'avant plus haut que l'arrière ; caractérisée en ce qu'elle comporte, entre ses extrémités avant et arrière, une paroi autoportante à section en U constituée par une tôle de fond et par deux tôles latérales, chaque dite tôle latérale comportant un panneau de base superposé à la tôle de fond, chaque panneau de base ayant chacun de ses deux bords longitudinaux qui est uni par soudure à la tôle de fond.

En prévoyant que la partie de la benne qui se situe entre ses extrémités avant et arrière soit formée par une paroi autoportante ainsi constituée par de simples tôles d'acier, la fabrication de la benne selon l'invention est considérablement plus simple que celle des bennes classiques dont les tôles ne font que revêtir une ossature en poutre d'acier qui donne à la benne sa rigidité.

Le choix de constituer la paroi autoportante de la benne par une tôle de fond et par deux tôles latérales, est particulièrement avantageux, car il permet d'utiliser pour le fond et pour les côtés, des tôles ayant juste des caractéristiques de résistance mécanique qui suffisent pour supporter les contraintes, de nature différente, que subissent le fond et les côtés ; tandis que la façon dont on joint les tôles latérales à la tôle de fond, grâce à l'existence du panneau de base superposé et uni à la tôle de fond, est particulièrement simple à mettre en oeuvre et résistant à l'usage.

Selon des caractéristiques préférées, ladite tôle de fond comporte de part et d'autre d'un panneau central, un panneau latéral dont le bord longitudinal extérieur est plus haut que le bord longitudinal intérieur par lequel il se raccorde au panneau central, et c'est à un panneau latéral respectif de la tôle de fond qu'est superposé et uni le panneau de base des tôles latérales respectives.

On limite ainsi autant que possible la largeur du panneau de base des tôles latérales, c'est-à-dire la quantité de matière de ces dernières qui est nécessaire pour leur jonction à la tôle de fond.

Selon d'autres caractéristiques préférées, ladite tôle de fond comporte, de chaque côté, au moins à un emplacement localisé prédéterminé, une partie incurvée vers le bas la prolongeant vers l'extérieur au-delà du bord longitudinal externe du panneau de base de la tôle latérale se trouvant de ce côté, cette partie incurvée vers le bas étant adaptée à coopérer avec un élément de centrage et de maintien latéral de la benne, que comporte ladite structure du véhicule.

On obtient ainsi les éléments de centrage et de maintien latéral de la benne, par simple conformation d'un morceau de la tôle de fond, ce qui évite d'avoir à effectuer lors de la fabrication une opération plus complexe où ces éléments seraient unis par soudure au reste de la benne.

Selon d'autres caractéristiques préférées, chaque dit tôle latérale comporte un panneau supérieur et une pluralité de panneaux intermédiaires entre le panneau supérieur et le panneau de base, chacun des panneaux intermédiaires et du panneau de base ayant par rapport au panneau supérieur, une inclinaison plus importante que celle du panneau auquel il se raccorde par son bord longitudinal externe.

Grâce à cette conformation des tôles latérales, on obtient une benne arrondie dans ses deux angles entre le fond et les côtés, ce qui permet d'éviter que ne se produisent des concentrations de contrainte dans ces angles.

Selon d'autres caractéristiques préférées de la benne conforme à l'invention, elle comporte deux longerons dont chacun est uni par soudure à un sommet respectif de ladite paroi autoportante à section en U, sur la face externe de cette paroi.

Ces longerons, ainsi disposés, permettent de renforcer la rigidité de la benne avec un encombrement et une quantité de matière supplémentaire qui sont particulièrement réduits.

De préférence, compte tenu de ce qui précède, chaque dit longeron est constitué par une tôle mise en forme de sorte qu'elle comporte deux bords extrêmes disjoints, au niveau de chacun desquels ledit longeron est uni par soudure à ladite paroi.

Dans un premier mode de réalisation, la benne conforme à l'invention est une benne amovible du type qui comporte une anse de levage sur sa face avant, et deux rails longitudinaux sur la face inférieure de ladite tôle de fond, ladite structure dudit véhicule comportant un appareil de manutention du type comportant une potence basculante munie à son sommet d'un crochet prévu pour s'engager avec l'anse de levage, ainsi que deux galets pour porter lesdits rails.

Dans un deuxième mode de réalisation, auquel elle convient particulièrement bien, la benne conforme à l'invention est montée de façon permanente sur le véhicule.

L'invention propose à cet égard, sous un deuxième aspect, un véhicule, caractérisé en ce qu'il comporte un bâti sur lequel une benne telle qu'exposée précédemment, est montée à basculement autour d'un axe transversal situé à l'arrière de ce véhicule et de cette benne.

Dans une première forme de réalisation de ce véhicule, qui convient particulièrement bien aux camions du type à châssis porteur, ledit bâti comporte un faux-châssis rapporté sur le châssis du véhicule, ladite benne étant montée à basculement autour dudit axe transversal sur ledit faux châssis, et reposant par la face inférieure de sa tôle de fond sur le faux-châssis dans ladite position route.

Dans un deuxième mode de réalisation, qui convient particulièrement bien au cas où le véhicule est du type semi-remorque, ledit bâti est formé directement par le châssis du véhicule, qui comporte deux longerons à section en I sur l'aile supérieure de laquelle repose la face inférieure de la tôle de fond.

De préférence, afin que la structure de la benne et du châssis du véhicule soit la plus simple possible, dans le cas où ce sont des panneaux latéraux inclinés et de la benne qui sont en regard des longerons en I du châssis, l'aile supérieure de chaque dit longeron est inclinée avec son bord longitudinal externe qui est plus haut que son bord longitudinal interne.

L'exposé de l'invention sera maintenant poursuivi par la description d'exemples de réalisation, donnée ci-après à titre illustratif et non limitatif, en référence aux dessins annexés sur lesquels :
- la figure 1 est une vue en élévation prise depuis le côté gauche, d'un camion à châssis porteur conforme à l'invention montré avec sa benne en position de bennage ;
- les figures 2 et 3 sont des élévations-coupes simplifiées, prises suivant les plans indiqués respectivement en Il-Il et en III-III sur la figure 1 ;
- la figure 4 est une vue similaire à la figure 1, mais avec la benne en position route ;
- les figures 5 à 8 sont des vues similaires aux figures 1 à 4, mais pour une semi-remorque au lieu d'un camion à châssis porteur ;
- la figure 9 est une vue similaire à la figure 1, dans un mode de réalisation où la benne est amovible tandis que le camion est équipé d'un appareil de manutention de bennes de ce type ; et
- la figure 10 est une vue en élévation-coupe simplifiée, prise suivant le plan indiqué en X-X sur la figure 9.

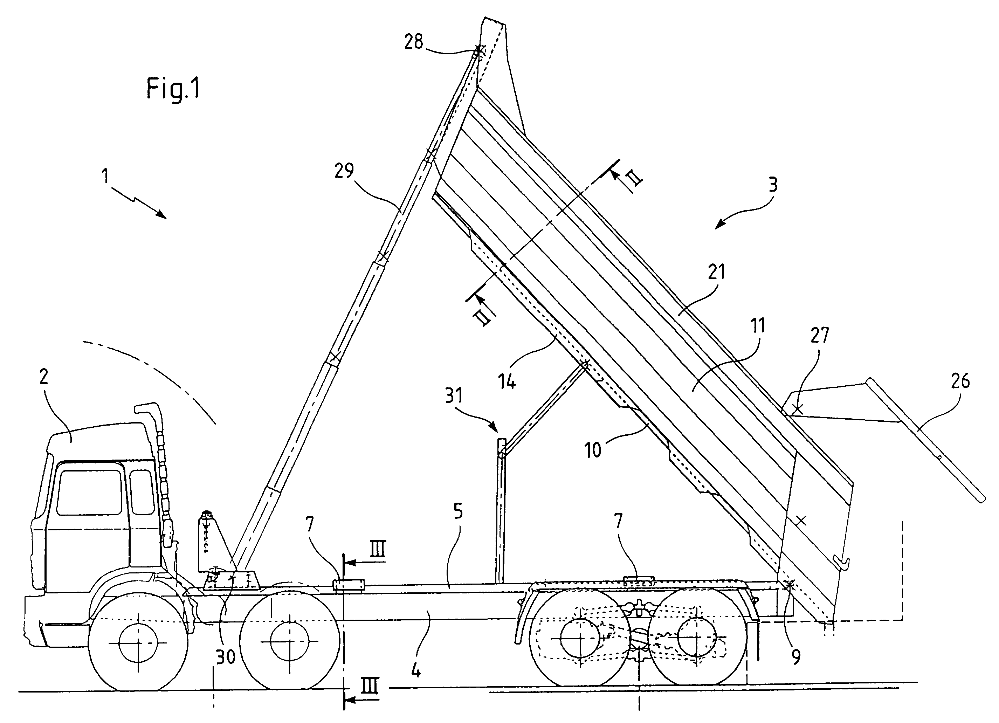

Le véhicule 1 montré sur les figures 1 à 4 est un camion du type porteur, comportant à l'avant une cabine 2 sous laquelle se trouve son moteur, et derrière laquelle est installée une benne basculante 3.

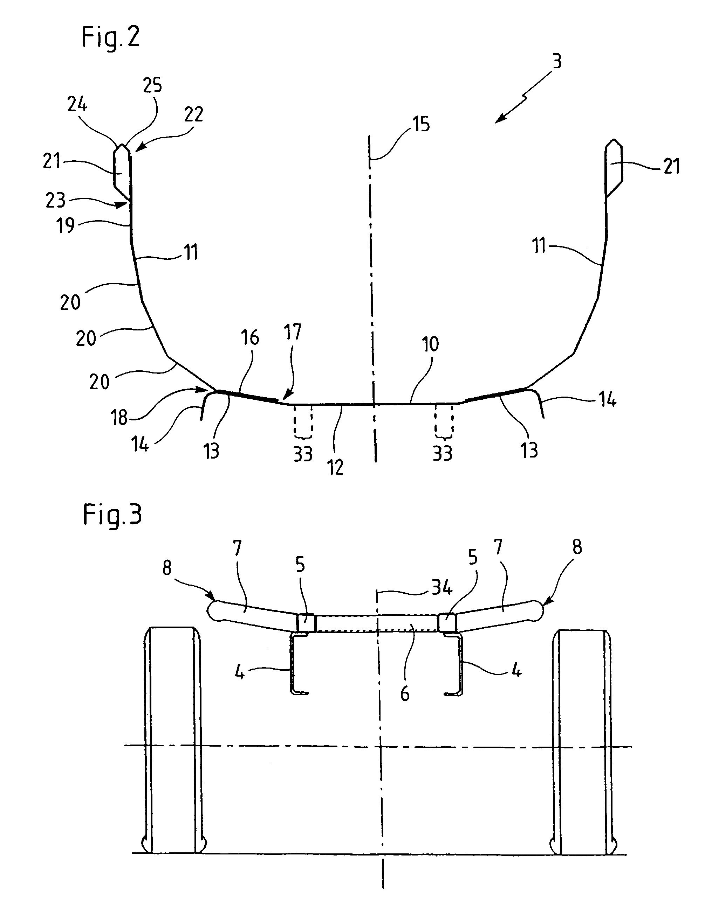

De façon classique, le bâti du camion 1 comporte le châssis proprement dit de celui-ci, châssis qui comporte notamment les deux longerons 4 en forme de C qui se regardent par leur côté ouvert (voir figure 3), et un faux châssis rapporté sur le châssis, faux châssis qui comporte notamment deux longerons 5 dont chacun est rapporté sur l'un des longerons 4 respectifs, des traverses telles que la traverse 6 (figure 3) étant prévues entre les longerons 5, tandis qu'à l'extérieur de chaque longeron 5, il est prévu deux éléments 7 de centrage et de maintien latéral de la benne 3, respectivement un élément avant localisé juste derrière le deuxième essieu du véhicule, et un élément arrière 7 localisé entre les troisième et quatrième essieux. Chaque élément 7 s'étend en saillie vers l'extérieur par rapport au longeron 5 auquel il est fixé, et comporte à son extrémité une surface arrondie 8.

La benne 3 est montée à basculement d'une façon permanente directement à l'arrière des longerons 5, autour d'un axe transversal de pivotement 9.

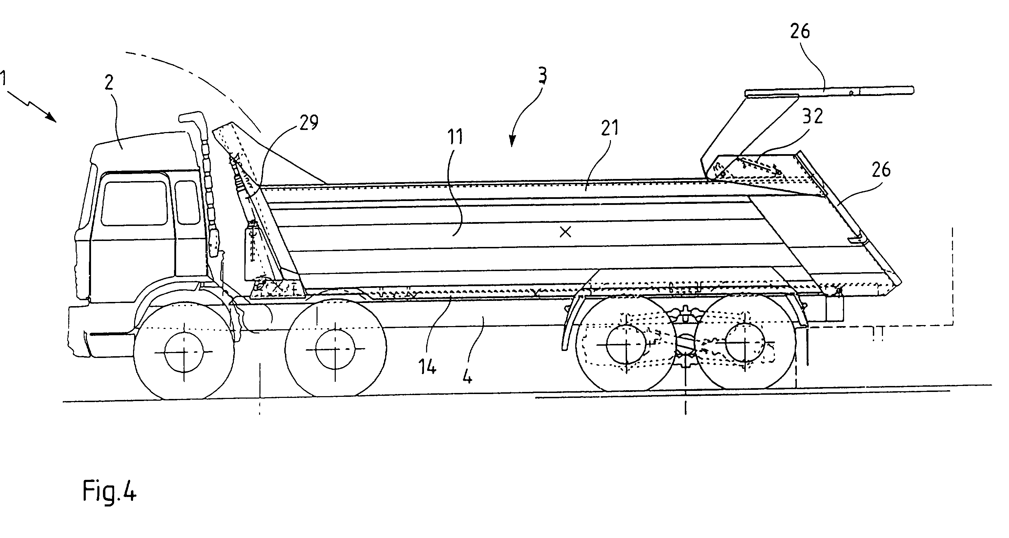

Comme on le voit plus particulièrement sur la figure 2, la benne 3 comporte entre ses extrémités avant et arrière, une paroi autoportante à section en U, constituée par une tôle de fond 10 et par deux tôles latérales 11. La tôle centrale 10 comporte un panneau central 12, qui est horizontal ou à peu près dans la position route montrée sur la figure 4, le panneau 10 se raccordant de chaque côté à un panneau latéral incliné 13, le bord longitudinal externe de chaque panneau 13 étant plus haut que son bord longitudinal interne par lequel il se raccorde au panneau 12, la tôle 10 se prolongeant au-delà des panneaux 13 par une partie 14 incurvée vers le bas, cette partie incurvée ayant été découpée à l'emplacement des roues des deuxième, troisième et quatrième essieux, afin de permettre leurs débattements (voir figures 1 et 4).

On va maintenant décrire, en se référant plus particulièrement à la figure 2, la tôle latérale gauche et la façon dont elle est jointe à la tôle de fond 10, étant entendu que la description qui va suivre vaut également pour la tôle latérale de droite, la benne 3 admettant un plan de symétrie longitudinal 15.

La tôle latérale 11 comporte un panneau de base 16 qui est superposé au panneau 13 de la tôle 10, le bord longitudinal interne 17 et le bord longitudinal externe 18 du panneau 16 étant chacun uni à la tôle 10, et plus précisément au panneau 13, par un cordon de soudure.

A son autre extrémité, la tôle 11 comporte un panneau supérieur 19, qui est ici vertical, trois panneaux intermédiaires 20 étant prévus entre le panneau supérieur 19 et le panneau de base 16.

On voit que les angles suivant lesquels la tôle 11 a été pliée pour former les panneaux 16, 20 et 19, sont tels que l'inclinaison du panneau 16 par rapport au panneau 19 est plus importante que l'inclinaison du panneau 20 qui se raccorde au bord longitudinal supérieur du panneau 16. De même chacun des panneaux 20 a une inclinaison par rapport au panneau 19 qui est plus importante que celle du panneau auquel il se raccorde par son bord longitudinal externe.

Grâce à ce pliage de la tôle 11, et à celui effectué sur la tôle 10 entre le panneau 12 et le panneau 13, la benne 3 a un angle entre son fond et ses côtés qui a une forme générale arrondie.

Au sommet de la benne 3, et plus précisément sur la face externe du panneau 19, se trouve un longeron 21, constitué par une tôle mise en forme de sorte qu'elle comporte deux bords extrêmes 22 et 23 disjoints, au niveau de chacun desquels le longeron 21 est uni par soudure à la tôle 11.

On observera que dans l'exemple illustré, la partie supérieure des longerons 21 comporte deux panneaux 24 et 25 ayant la forme d'un toit à deux pentes.

Grâce à cette forme, au cas où de la matière de type pulvérulent se déposerait sur le longeron lors du chargement de la benne, elle aurait tendance à glisser directement soit vers l'intérieur de la benne soit vers le sol, ce qui permet d'éviter que cette matière, ultérieurement, lors de son transport, ne s'envole derrière le véhicule ou ne se répande sur la chaussée.

La partie arrière de la benne 3 a une constitution de type classique, avec des renforts pour permettre d'une part l'articulation sur les longerons 5 autour de l'axe 9, et d'autre part que la face arrière ne soit pas solidaire du reste de la benne, mais soit constituée par une porte basculante 26 pivotant autour de l'axe d'articulation supérieur 27.

De même, la partie avant de la benne 3 est de type classique, avec des renforts au sommet desquels est articulée, autour de l'axe transversal 28, l'extrémité supérieure du vérin 29 à télescopages multiples dont l'extrémité inférieure est articulée sur des traverses prévues entre les longerons 5 du faux châssis, autour d'un axe transversal 30. Il est encore prévu, entre le faux châssis et la benne 3, un compas de stabilisation 31 permettant d'éviter des mouvements de vrillage entre la benne 3 et le bâti du véhicule 1.

Dans la position de bennage illustrée sur la figure 1, le vérin 29 est entièrement déployé, de sorte que la benne 3 est inclinée avec son avant plus haut que son arrière, l'ouverture de la porte 26 permettant à la matière contenue à l'intérieur de la benne de se vider derrière le véhicule 1.

En rétractant le vérin 29, jusqu'à sa position complètement rentrée, on ramène la benne 3 jusqu'à sa position route montrée sur la figure 4, où elle est horizontale, tandis que l'actionnement du petit vérin 32 permet à la porte 26 de passer de la position ouverte à la position fermée.

En position route, le compas 31 est logé entre les longerons 5, et la benne 3 repose sur le faux châssis par la face inférieure de la tôle 10, le contact se faisant, sur toute la longueur de la benne, sur le dessus des longerons 5 pour ce qui est du bâti du véhicule, et sur les zones 33 pour ce qui est de la benne 3.

A la fin du mouvement de descente de la benne 3, la coopération entre les parties incurvées 14 de la tôle 10 et les surfaces 8 des éléments 7, permet de centrer la benne par rapport au bâti du véhicule, c'est-à-dire de faire coïncider le plan de symétrie 15 de la benne avec le plan de symétrie 34 du véhicule. Lorsque celui-ci circule, la coopération entre les parties 14 et les éléments 7, permet d'effectuer un maintien latéral de la benne par rapport au bâti du véhicule 1.

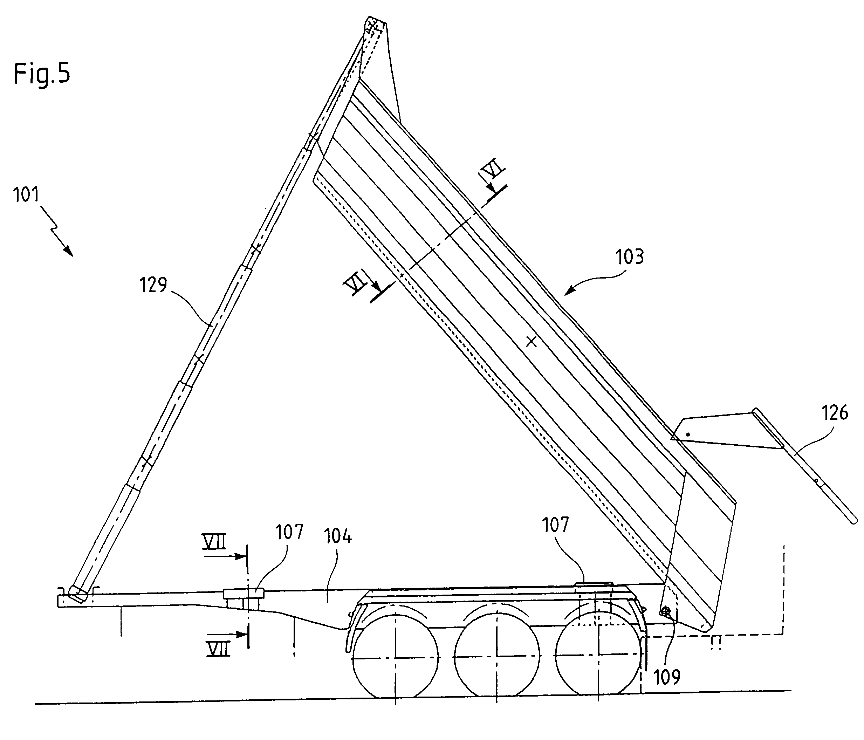

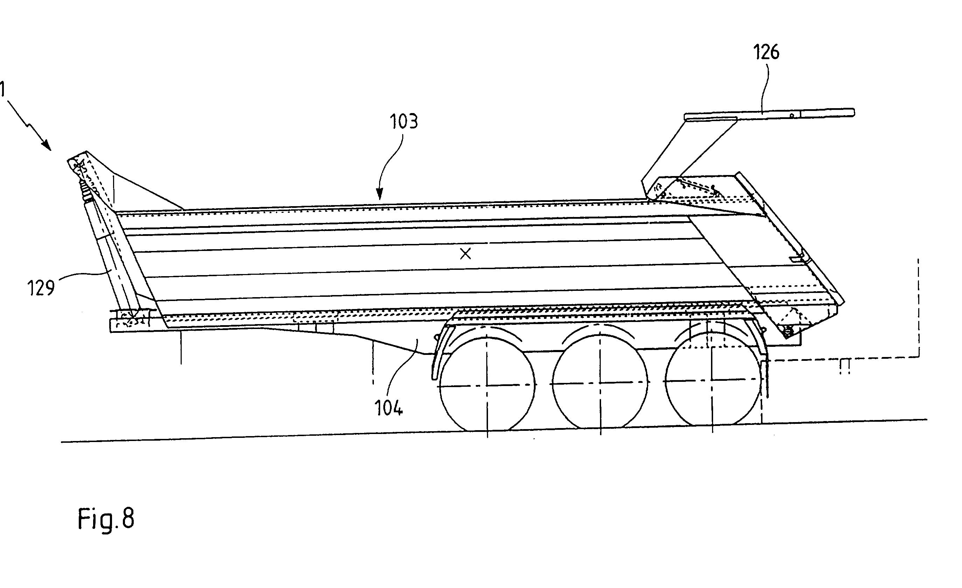

On va maintenant décrire la variante du véhicule 1, illustrée sur les des figures 5 à 8. Afin de simplifier la description, on a utilisé les mêmes références numériques pour les éléments similaires, mais additionnées du chifre 100.

Au lieu d'être à châssis porteur comme le véhicule 1, le véhicule 101 est du type semi-remorque, avec un bâti spécialement adapté à la benne 103, qui est identique à la benne 3.

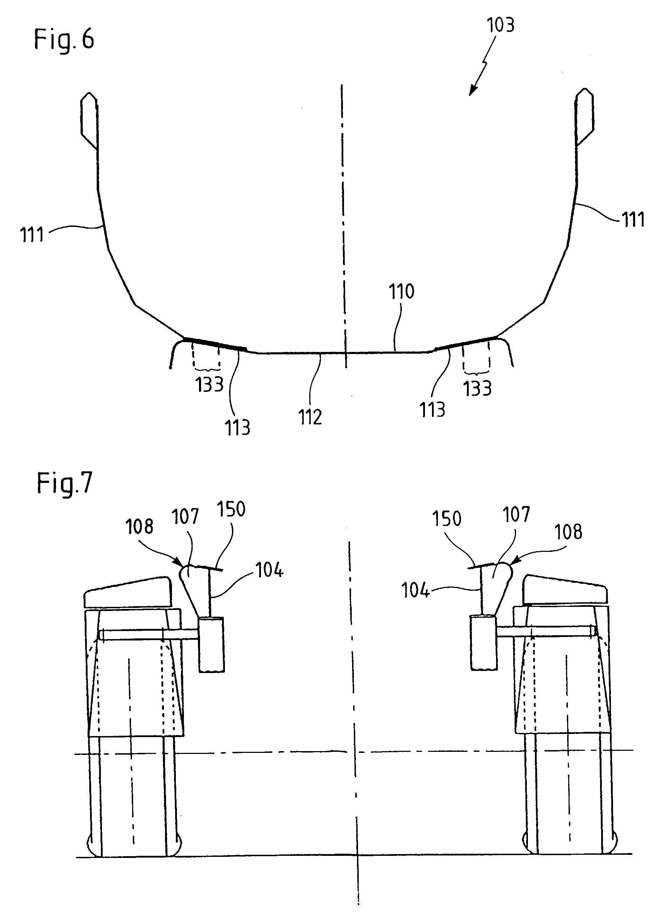

Le bâti ou châssis du véhicule 103 est ainsi formé par deux longerons 104 réunis par des traverses (non représentées), chacun des longerons 104 ayant une section en I (voir figure 7) dont la hauteur est constante et relativement peu élevée à l'avant, puis s'accroît progressivement jusqu'au premier essieu, à partir duquel elle reste constante jusqu'à l'arrière.

Compte tenu de l'écartement entre les longerons 104, les zones 133 de la face inférieure de la tôle 110 par lesquelles la benne 103 vient en contact avec ces longerons, se trouvent au niveau des panneaux latéraux 113, qui sont inclinés, de sorte l'on a prévu que l'aile supérieure 150 des longerons 104 a une inclinaison correspondante, c'est-à-dire que ces ailes ont chacune leur bord longitudinal externe qui est plus haut que leur bord longitudinal interne.

Dans l'exemple illustré, le châssis de la semi-remorque est suffisamment rigide pour qu'il ne soit pas utile de prévoir un compas de stabilisation, mais il peut être utile, suivant les circonstances, de prévoir un tel compas.

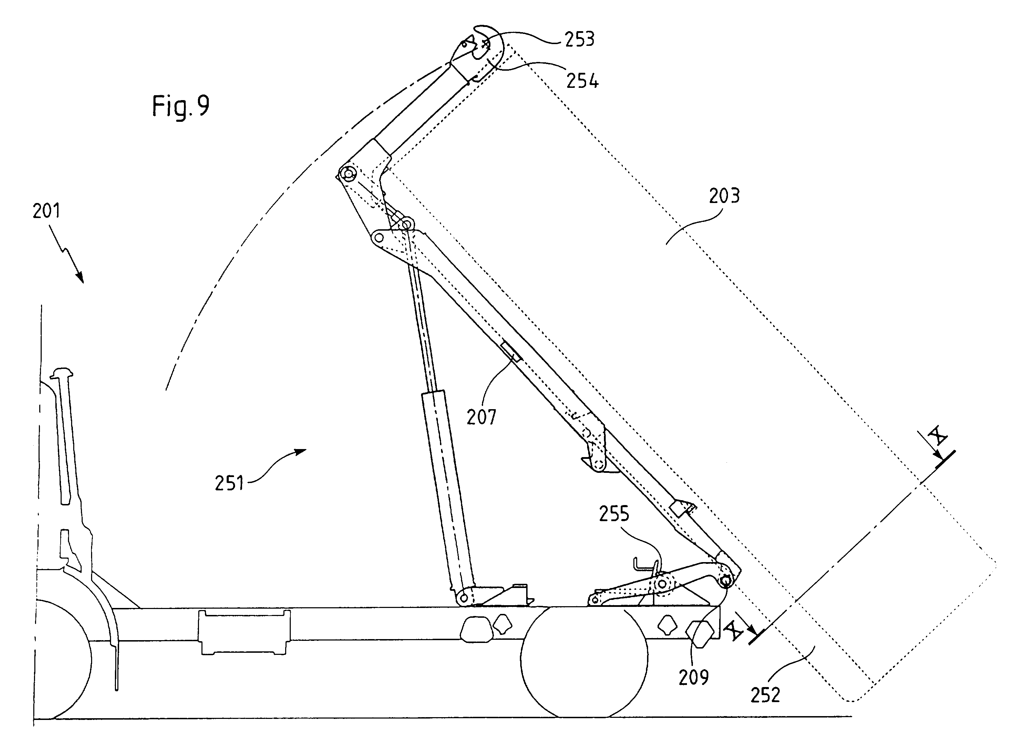

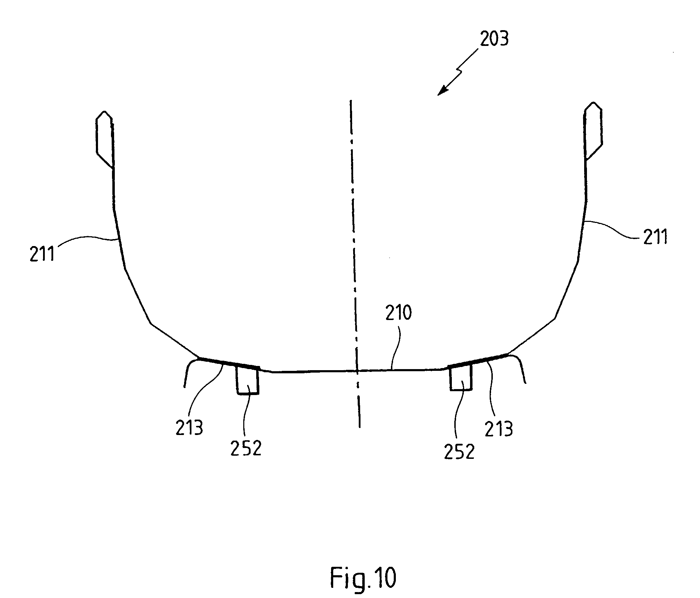

Dans la variante des figures 9 et 10, on a également employé les mêmes références que pour le mode de réalisation des figures 1 à 4, mais additionnées du chiffre 200.

Le véhicule 201 est ici également du type à châssis porteur, mais au lieu d'être équipé d'un faux châssis sur lequel est montée une benne de façon permanente, il est muni d'un appareil de manutention 251 tel que celui décrit dans EP-A-0.621.157, appartenant à la demanderesse, auquel on pourra se référer pour de plus amples détails.

La benne 203, dont seul le contour est indiqué en trait interrompu sur la figure 9, a une constitution similaire à celle des bennes 3 et 103, ses parties avant et arrière étant différentes, tandis que sous la face inférieure de la tôle 210, il est prévu deux rails longitudinaux 252, disposés respectivement à droite et à gauche au niveau des panneaux latéraux 213.

La partie avant de la benne 203 est du type classique bien connu qui comporte des renforts ayant la forme générale d'un A au sommet duquel se trouve l'anse de levage 253, tandis que la partie arrière est fermée par un jeu de deux portes.

Grâce aux rails 252 et à l'anse de levage 253, la benne 203 est adaptée à coopérer avec l'appareil 251, qui comporte au sommet d'une potence un crochet 254 adapté à s'engager avec le crochet 253, et des galets 255 pour porter les rails 252, l'appareil 251 permettant de prendre au sol la benne 203 et de la charger sur le véhicule 251 jusqu'à une position route où la benne 203 repose sur la structure basculante de l'appareil 251 à l'horizontale ou à peu près, de décharger à l'inverse cette benne, ou de l'amener dans la position de bennage montrée sur la figure 9, de la façon expliquée dans EP-A-0.621.157.

Bien entendu, la benne 203 est également adaptée à coopérer avec les divers autres types connus d'appareils à structure basculante prévus pour coopérer avec une benne à anse de levage avant et à rails inférieurs.

On rappelle que l'invention ne se limite pas aux exemples décrits et représentés.

## Revendications

1. Benne pour véhicule, adaptée à coopérer avec la structure dudit véhicule de sorte qu'elle puisse pivoter, sous l'effet d'un moyen d'entraînement que comporte ledit véhicule, autour d'un axe transversal situé à l'arrière du véhicule, entre une position route où elle est horizontale ou à peu près et une position de bennage où elle est inclinée avec l'avant plus haut que l'arrière ; caractérisée en ce qu'elle comporte, entre ses extrémités avant et arrière,pour former le fond et les côtés, une paroi autoportante à section en U constituée par une tôle de fond (10 ; 110 ; 210) et par deux tôles latérales (11 ; 111 ; 211), chaque dite tôle latérale comportant un panneau de base (16) superposé à la tôle de fond (10), chaque panneau de base (16) ayant chacun de ses deux bords longitudinaux (17, 18) qui est uni par soudure à la tôle de fond (10 ; 110 ; 210).

2. Benne selon la revendication 1, caractérisée en ce que ladite tôle de fond (10 ; 110 ; 210) comporte de part et d'autre d'un panneau central (12), un panneau latéral (13) dont le bord longitudinal extérieur est plus haut que le bord longitudinal intérieur par lequel il se raccorde au panneau central (12), et en ce que c'est à un panneau latéral (13) respectif de la tôle de fond (10 ; 110 ; 210) qu'est superposé et uni le panneau de base (16) des tôles latérales respectives (11 ; 111 ; 211).

3. Benne selon l'une quelconque des revendications 1 ou 2, caractérisée en ce que ladite tôle de fond comporte, de chaque côté, au moins à un emplacement localisé prédéterminé, une partie (14) incurvée vers le bas la prolongeant vers l'extérieur au-delà du bord longitudinal externe du panneau de base (16) de la tôle latérale (11 ; 111 ; 211) se trouvant de ce côté, cette partie incurvée vers le bas (14) étant adaptée à coopérer avec un élément de centrage et de maintien latéral (7 ; 107 ; 207) de la benne, que comporte ladite structure (4, 5 ; 104 ; 251) du véhicule.

4. Benne selon l'une quelconque des revendications 1 à 3, caractérisée en ce que chaque dite tôle latérale (11 ; 111 ; 211) comporte un panneau supérieur (19) et une pluralité de panneaux intermédiaires (20) entre le panneau supérieur (19) et le panneau de base (16), chacun des panneaux intermédiaires (20) et du panneau de base (16) ayant par rapport au panneau supérieur (19), une inclinaison plus importante que celle du panneau auquel il se raccorde par son bord longitudinal externe.

5. Benne selon l'une quelconque des revendications 1 à 4, caractérisée en ce qu'elle comporte deux longerons (21) dont chacun est uni par soudure à un sommet respectif de ladite paroi autoportante à section en U (10, 11 ; 110, 111 ; 210, 211), sur la face externe de cette paroi.

6. Benne selon la revendication 5, caractérisée en ce que chaque dit longeron (21) est constitué par une tôle mise en forme de sorte qu'elle comporte deux bords extrêmes (22, 23) disjoints, au niveau de chacun desquels ledit longeron est uni par soudure à ladite paroi.

7. Benne selon l'une quelconque des revendications 5 ou 6, caractérisée en ce que chaque dit longeron (21) comporte une partie supérieure en forme de toit à deux pentes.

8. Benne selon l'une quelconque des revendications 1 à 7, caractérisée en ce qu'elle comporte une anse de levage (253) sur sa face avant, et deux rails longitudinaux (252) sur la face inférieure de ladite tôle de fond (210), ladite structure dudit véhicule comportant un appareil de manutention (251) du type comportant une potence basculante munie à son sommet d'un crochet (254) prévu pour s'engager avec l'anse de levage (253), ainsi que deux galets (255) pour porter lesdits rails.

9. Véhicule à benne, caractérisé en ce qu'il comporte un bâti sur lequel une benne (3 ; 103) selon l'une quelconque des revendications 1 à 7 est montée à basculement autour d'un axe transversal (9 ; 109) situé à l'arrière de ce véhicule et de cette benne.

10. Véhicule selon la revendication 9, caractérisé en ce que ledit bâti comporte un faux-châssis (5, 6) rapporté sur le châssis (4) du véhicule, ladite benne (3) étant montée à basculement autour dudit axe transversal (9) sur ledit faux châssis, et reposant par la face inférieure de sa tôle de fond (10) sur le faux-châssis dans ladite position route.

11. Véhicule selon la revendication 9, caractérisé en ce que ledit bâti est formé directement par le châssis du véhicule, qui comporte deux longerons (104) à section en I sur l'aile supérieure de laquelle repose la face inférieure de la tôle de fond (110).

12. Véhicule selon la revendication 11, caractérisé en ce que l'aile supérieure (150) de chaque dit longeron (104) est inclinée avec son bord longitudinal externe qui est plus haut que son bord longitudinal interne.

13. Véhicule selon l'une quelconque des revendications 9 à 12, caractérisé en ce que son dit bâti comporte, de chaque côté, à au moins un emplacement localisé prédéterminé, au moins un élément de centrage et de maintien latéral (7 ; 107) de la benne, en saillie vers l'extérieur par rapport à un longeron (5 ; 104) faisant partie dudit bâti.

14. Véhicule selon l'une quelconque des revendications 9 à 13, caractérisé en ce qu'il comporte un compas (31) de stabilisation entre ledit bâti et ladite benne.

15. Véhicule selon l'une quelconque des revendications 9 à 14, caractérisé en ce qu'il comporte comme moyens d'entraînement pour faire pivoter ladite benne (3 ; 103) autour dudit axe transversal, un vérin (29) à télescopages multiples disposé entre le bâti et l'avant de la benne.
